# EUROPEAN PATENT SPECIFICATION

(11) **EP 3 818 278 B1**
(45) Date of publication and mention of the grant of the patent: **19.10.2022**
(21) Application number: 19739527.0
(22) Date of filing: 28.06.2019
(51) Int. Cl.: F16D 25/06, F16D 25/08, F16D 23/12

(54) **CLUTCH ACTUATOR**
KUPPLUNGSAKTUATOR
ACTIONNEUR D'EMBRAYAGE

(30) Priority: 28.06.2018 KR 20180074775
(43) Date of publication of application: 12.05.2021
(73) Proprietor: VALEO EMBRAYAGES, 80009 Amiens (FR); Valeo Pyeong Hwa Co., Ltd., Daegu 704-190 (KR)
(72) Inventor: MAUREL, Hervé, 95892 CERGY PONTOISE (FR); COLIN, Sébastien, 95892 CERGY PONTOISE (FR); JO, Jooyong, 95892 CERGY PONTOISE (FR); JANG, Jinho, 95892 CERGY PONTOISE (FR)
(74) Representative: Valeo Powertrain Systems
(86) International application number: PCT/EP2019/067416
(87) International publication number: WO 2020/002643

(56) References cited:
- DE-B3-102013 213 888
- KR-B1- 101 418 822
- KR-B1- 101 526 789
- US-A1- 2009 229 392

## Description

### [Technical Field]

The present invention relates to a clutch actuator providing an operating force to a clutch in order to interrupt power.

### [Background Art of the Invention]

In general, an automatic manual transmission developed by taking the advantages of a manual transmission and an automatic transmission has a gear arrangement similar to that of the conventional manual transmission and is configured so that power interruption for shifting gears can be automatically implemented through the operation control of an actuator. For example, the automatic manual transmission includes an automated manual transmission (AMT) or a double clutch transmission (DCT) and the like.

In the case of the automatic manual transmission, actuators capable of adjusting displacement should be provided in order to interrupt the power, and most of the actuators adjust a stroke through the forward/reverse driving control of the motor.

For example, a hydraulic clutch actuator disclosed in Korean Patent Registration No. 10-1489500 may comprise: a piston generating a hydraulic pressure in a fluid introduced into a master cylinder; a transfer nut provided to be able to move as one with the piston; a transfer guide capable of linear movement guiding the transfer nut while preventing the transfer nut from being axially rotated; a transfer screw which moves the transfer nut in a reciprocating manner; and a driving motor axially rotating the transfer screw. As described above, the conventional clutch actuator has a problem in that an internal structure of the clutch actuator should be changed, for example, by replacing a driving motor with a driving motor having a high or low output or adding a decelerating device when the object is to adjust the generated amount of hydraulic pressure.

### [Prior Art Documents]

### [Patent Documents]

(Patent Document 1) Korean Patent Registration No. 10-1489500

Other clutch actuators are disclosed in documents: DE 10 2013 213 888 B3, KR 101 526; 789 B1, KR 101 418 822 B1 and US 2009/229392 A1.

### [Disclosure of the Invention]

### [Problem to be Solved]

An object of an embodiment of the present invention is to provide a clutch actuator which can obtain a constant reduction ratio or variably adjust the reduction ratio according to the setting of a profile of an inclined surface of a cam slider coming into contact with a nut slider.

Also, an object of an embodiment of the present invention is to provide a clutch actuator in which a hydraulic pressure generator, which can be influenced by a hydraulic operating force when the clutch actuator is installed in an actual vehicle, is disposed at an end portion of a housing to increase a degree of freedom from interference, and thereby can prevent the hydraulic pressure generator from interfering with surrounding structures or other devices within an engine room.

### [Means for Solving the Problem]

According to an embodiment of the present invention, provided may be a clutch actuator comprising: a housing; a driving motor coupled to one side of the housing to provide power; a hydraulic pressure generator coupled to the other side of the housing to generate a hydraulic pressure; a ball screw rotated by means of the driving motor; a nut slider engaged with the ball screw and which moves along a longitudinal direction of the ball screw by means of the rotation of the ball screw; a cam slider moving linearly along an operating direction of the hydraulic pressure generator by means of the movement of the nut slider; a roller unit provided at the nut slider so as to come into rolling contact with the cam slider; and a push rod provided at the cam slider to press a piston of the hydraulic pressure generator.

The nut slider may comprise an idle roller in rolling contact with an inner side surface of the housing.

The housing may comprise a second guide portion for guiding the movement of the nut slider.

The housing may further comprise a first guide portion for guiding the movement of the cam slider.

The cam slider may comprise: a central portion; a first extended portion formed extending from the central portion in one direction, the first extended portion comprising an inclined surface in contact with the roller unit; and a second extended portion formed extending from the central portion in a direction intersecting with said one direction, wherein the second extended portion may be accommodated in the first guide portion.

The cam slider may further comprise at least one or more guide units provided at the second extended portion so as to be in rolling contact with an inner side surface of the first guide portion.

The second extended portion may be disposed between the driving motor and the hydraulic pressure generator.

The first extended portion may be disposed in parallel with a movement direction of the nut slider.

The second guide portion and the first guide portion may be extended in a direction intersecting with each other.

### [Advantages of The Invention]

According to the clutch actuator of the present invention, there may be an advantage in that it is possible to obtain the constant reduction ratio or variably adjust the reduction ratio according to the setting of the profile of the inclined surface of the cam slider coming into contact with the nut slider. Also, the hydraulic pressure generator, which can be influenced by the hydraulic operating force by means of interference when the clutch actuator is installed in the actual vehicle, may be disposed at the end portion of the housing to increase the degree of freedom from interference, and thereby can prevent the hydraulic pressure generator from interfering with the surrounding structures or other devices within the engine room.

### [Brief Description of the Drawings]

FIG. 1 is a perspective view of a clutch actuator according to an embodiment of the present invention.
FIG. 2 is an exploded perspective view of a driving motor and a hydraulic pressure generator of FIG. 1.
FIG. 3 is an exploded perspective view illustrating an internal configuration of a housing by removing a part of the housing in FIG. 2.
FIG. 4 is a cross-sectional view taken along line A-A of FIG. 1.
FIG. 5 is an exploded perspective view illustrating a state in which a ball screw, a nut slider, and a cam slider are separated from the housing in the clutch actuator according to an embodiment of the present invention.
FIG. 6 is a perspective view illustrating a coupled state of the nut slider and the cam slider in FIG. 5.

### [Detailed Description for Carrying Out the Invention]

Hereinafter, configurations and operations according to an embodiment of the present invention will be described in detail with reference to the accompanying drawings. The following description is one of many aspects of the claimed present invention, and the following description may constitute a part of the detailed description of the present invention.

However, in the description of the present invention, the detailed description of the known configurations or functions may be omitted for the sake of clarity.

While the present invention can have various modifications applied thereto and include various embodiments, specific embodiments will be illustrated in the drawings and be described in the detailed description. However, this does not limit the present invention within specific embodiments, and it should be understood that the present invention covers all the modifications, equivalents, and replacements within the spirit and technical scope of the present invention.

It will be understood that although the ordinal numbers such as first and second are used herein to describe various constituent elements, these constituent elements should not be limited by these terms. The terms are only used to distinguish one constituent element from other constituent elements.

It will also be understood that when a constituent element is referred to as being 'connected to' or 'coupled with' another constituent element, it can be directly connected to or coupled with the other constituent element, or intervening constituent elements may also be present.

The technical terms used in the present application are used only for explaining a specific exemplary embodiment while not limiting the present invention. The terms of a singular form may include plural forms even if not clearly stated to be different within the context.

Hereinafter, a clutch actuator (10) according to an embodiment of the present invention will be described with reference to the accompanying drawings.

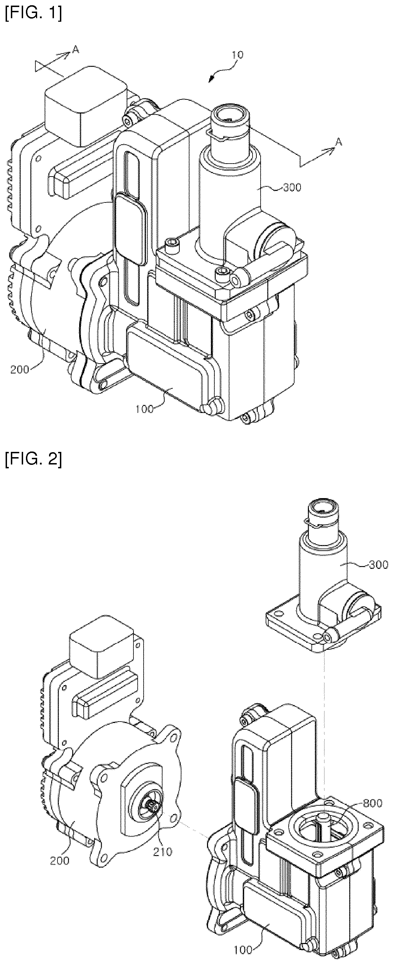

Referring to FIGS. 1 to 3, the clutch actuator (10) according to an embodiment of the present invention may comprise a housing (100), a driving motor (200), a hydraulic pressure generator (300), a ball screw (400), a nut slider (500), a cam slider (600), a roller unit (700), and a push rod (800). The clutch actuator (10) according to an embodiment of the present invention may be constituted such that a driving force of the driving motor (200) is transmitted to the hydraulic pressure generator (300) by said constituents to interrupt power of the clutch by means of hydraulic pressure. Other constituents for transmitting the driving force of the driving motor (200) to the hydraulic pressure generator (300) may be built into the housing (100). A predetermined accommodation space may be formed in the housing (100) so that these constituents can be built into the accommodation space.

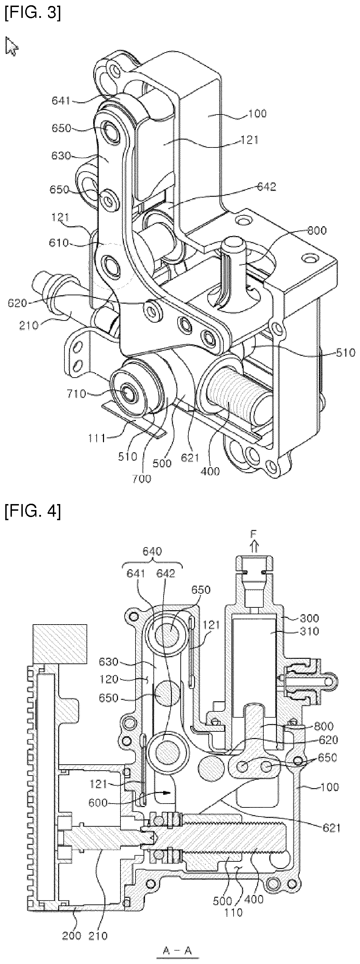

Thus, other constituents built into the housing (100) may be protected by the housing (100) and not exposed to the outside. Here, the housing (100) may have a split structure so as to be disassembled as necessary as illustrated in FIG. 3.

As illustrated in FIG. 1, the driving motor (200) and the hydraulic pressure generator (300) may be disposed on both side portions of the housing (100), respectively. The driving motor (200) is detachably fixed and coupled to the housing (100) by using a fastening means as a medium while being disposed to one side (the left side in the drawing) with respect to the housing (100). The driving motor (200) may generate power by means of electric power.

The hydraulic pressure generator (300) may be disposed at the other side (the right upper portion in the drawing) with respect to the housing (100) and detachably fixed and coupled to the housing (100) by using a fastening means as a medium. The hydraulic pressure generator (300) may be subjected to external force from the outside to generate a hydraulic pressure thereinside and be implemented in the form of a hydraulic cylinder in which a piston (310) is built-in thereinside to generate the hydraulic pressure.

Also, referring to FIGS. 2 to 4, the ball screw (400) may be rotatably installed within the housing (100). Since the driving motor (200) is fixed and coupled to one side of the housing (100), one side of the ball screw (400) may be power-connected to a rotation shaft (210) of the driving motor (200) and rotated within the housing (100). Also, the ball screw (400) may be disposed so that a longitudinal direction of the ball screw (400) and an operating direction of the hydraulic pressure generator (300) intersect with each other. For example, the ball screw (400) may be disposed so that the longitudinal direction of the ball screw (400) and the operating direction of the hydraulic pressure generator (300) are perpendicular to each other. The ball screw (400) may be replaced with, for example, a lead screw.

Also, the nut slider (500) may have a structure that surrounds an outer circumferential surface of the ball screw (400) and be engaged with the ball screw (400) on the outer circumferential surface of the ball screw (400). Thus, when the ball screw (400) is rotated, the nut slider (500) may linearly move along the longitudinal direction of the ball screw (400) within the housing (100).

Here, the nut slider (500) may comprise an idle roller (510) in rolling contact with an inner side surface of the housing (100) so as to easily move within the housing (100) in a linear direction. Although the position of the idle roller (510) installed on the nut slider (500) is not largely limited, in an embodiment of the prevent invention, the idle roller (510) may be implemented in such a manner so as to be installed idly on both side surfaces of the nut slider (500). The arrangement of the idle roller (510) will be described again later.

In order to smoothly guide the linear movement of the nut slider (500), the housing (100) may comprise a second guide portion (110) formed as a separate space therein. Thus, the idle roller (510) of the nut slider (500) may come into rolling contact with the second guide portion (110) and be rotated so that the nut slider (500) linearly moves along an extended direction of the second guide portion (110).

Also, when the idle roller (510) comes into rolling contact with the second guide portion (110), noise may occur. Here, in order to minimize the noise that occurs, a first flat plate member (111) made of a buffering material may be installed on a portion corresponding to the idle roller (510) on an extended path of the second guide portion (110). The first flat plate member (111) may be detachably assembled with the second guide portion (110) and be in direct rolling contact with the idle roller (510) to enable noise due to a frictional force with the idle roller (510) to be reduced.

Meanwhile, the cam slider (600) may move together by means of the linear movement of the nut slider (500) and linearly move in a direction parallel to the operating direction of the hydraulic pressure generator (300).

That is, the cam slider (600) may be interlocked through the contact with the nut slider (500). Here, the cam slider (600) may linearly move in the direction parallel to the operating direction for providing external force to the hydraulic pressure generator (300).

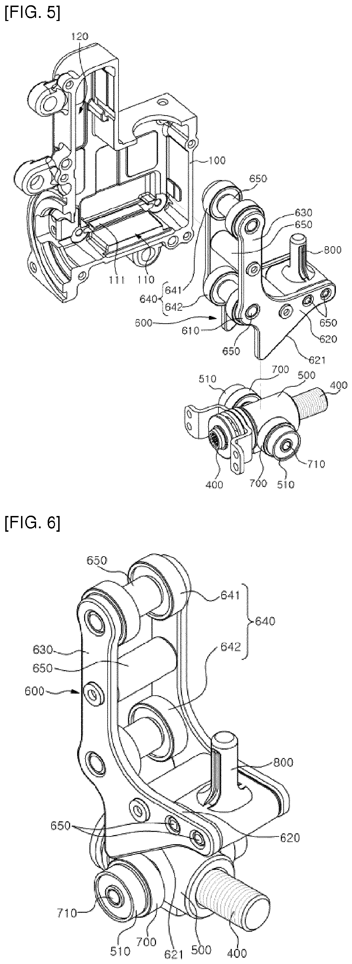

As illustrated in FIG. 5, the cam slider (600) interlocked with the nut slider (500) may be constituted by a pair of members that are spaced an adequate interval apart from each other to avoid interference with the nut slider (500). Although the cam slider (600) according to an embodiment of the present invention is illustrated as being installed in the housing (100) so as to be linearly movable in the direction intersecting with the movement direction of the nut slider (500), the movement direction of the cam slider (600) is not necessarily limited thereto. Also, the cam slider (600) may be provided as a single member without needing to be provided as a pair of members that are spaced apart from each other so long as the cam slider is a structure that can avoid interference with the nut slider (500).

As illustrated in FIGS. 4 and 5, the housing (100) may include a first guide portion (120) formed as a separate space therein so that the linear movement of the cam slider (600) is smoothly performed.

The first guide portion (120) may be formed extending from the housing (100) in a direction parallel to an operating direction (F) of the hydraulic pressure generator (300) so as to accurately guide the movement direction of the cam slider (600) to match the operating direction of the hydraulic pressure generator (300). Also, the first guide portion (120) is disposed between the driving motor (200) and the hydraulic pressure generator (300). Here, since the movement direction of the nut slider (500) and the movement direction of the cam slider (600) intersect with each other (particularly, perpendicular to each other), the second guide portion (110) and the first guide portion (120) of the housing (100) may be extended in the directions intersecting with each other.

The roller unit (700) is provided idly on the nut slider (500) to enable transmission of the moving force of the nut slider (500) to the cam slider (600) through the rolling contact with the cam slider (600).

Thus, when the nut slider (500) linearly moves on the second guide portion (110), the roller unit (700) in rolling contact with the cam slider (600) may transmit the moving force of the nut slider (500) to the cam slider (600) so that the cam slider (600) linearly moves, while being interlocked, in the direction intersecting with the nut slider (500) on the first guide portion (120). Also, the cam slider (600) may include an inclined surface (621) in direct rolling contact with the roller unit (700) so as to be interlocked with the nut slider (500). Here, a reduction ratio to a moving stroke of a push rod (800), which is concomitant with an operation of the driving motor (200) according to a preset profile (i.e., a path of the inclined surface (621)) in an initial design may be determined by the inclined surface (621).

For example, when the profile of the inclined surface (621) is set to the linear shape in the initial design, the reduction ratio may be maintained to a certain level in proportion to a change of the moving stroke of the nut slider (500). Also, when the profile of the inclined surface (621) is set to a curved shape, the reduction ratio may be varied depending on the change of the moving stroke of the nut slider (500). In this case, the reduction ratio may be determined according to the shape characteristic (inwardly curved or outwardly curved shape) of the profile of the inclined surface (621) in the initial design of the cam slider (600).

Here, the cam slider (600) may particularly comprise a central portion (610), a first extended portion (620), and a second extended portion (630).

The first extended portion (620) may be a portion formed extending from the central portion (610) of the cam slider (600) in one direction (for example, the direction parallel to the movement direction of the nut slider (500)), and the inclined surface (621) in contact with the roller unit (700) as described above may be formed on the first extended portion (620).

Also, the second extended portion (630) may be a portion formed extending from the cam slider (600) in a direction intersecting with the one direction (for example, the movement direction of the cam slider (600)), and the second extended portion (630) may be accommodated in the first guide portion (120) of the housing (100).

Here, the cam slider (600) may further comprise at least one or more guide units (640) that are provided on the second extended portion (630) and are in rolling contact with an inner side surface of the first guide portion (120). Here, since the cam slider (600) may have a structure that is spaced apart at an adequate interval as described above, the cam slider may be connected by using a plurality of support shafts (650) as media so as to avoid interference with the nut slider (500). Thus, the guide unit (640) may be mounted on the support shafts (650).

Here, the support shafts (650) may contribute to the procurement of a clearance on the cam slider (600) so that not only the guide unit (640) can be mounted but also the push rod (800) can be mounted on the cam slider (600).

The guide unit (640) may guide the movement direction of the cam slider (600) in the direction parallel to the operating direction of the hydraulic pressure generator (300) within the first guide portion (120). Here, the guide unit (640) may be implemented in the form of a roller that is installed idly on the cam slider (600) through axial coupling.

The guide unit (640) may comprise a first guide roller (641) and a second guide roller (642), which are installed at positions that are spaced a predetermined distance from each other in the movement direction of the cam slider (600).

Thus, the first guide roller (641) and the second guide roller (642) may be installed idly on the second extended portion (630) of the cam slider (600) so as to be spaced apart from each other. At the same time as the cam slider (600) linearly moves, the cam slider (600) may be accurately and smoothly guided within the first guide portion (120) to match the operating direction of the hydraulic pressure generator (300).

Also, second flat plate members (121) made of a buffering material and coming into individual contact with the first guide roller (641) and the second guide roller (642) may be detachably assembled on the first guide portion (120), respectively. The second flat plate members (121) may be provided in the number corresponding to the number of guide rollers (641, 642) and may be installed on the same surface within the first guide portion (120). However, as illustrated in FIG. 4, the second flat plate members (121) may be respectively installed on different surfaces of the first guide portion (120) to prevent the guide rollers (641, 642) from coming into direct contact with the inner side surface of the first guide portion (120).

Thus, when the cam slider (600) linearly moves, the first guide roller (641) and the second guide roller (642) may be in rolling contact with the second flat plate member (121) installed in the first guide portion (120) to minimize noise generated when the cam slider (600) operates.

Here, the second extended portion (630) of the cam slider (600) may be disposed between the driving motor (200) and the hydraulic pressure generator (300) as illustrated in FIG. 4. Thus, the hydraulic pressure generator (300) may be disposed naturally at the other end portion of the housing (100) on the housing.

As described above, since the hydraulic pressure generator (300) is disposed at the other end portion of the housing (100), which is relatively free from interference with other structures, but is not disposed between the driving motor (200) and the second extended portion (630), when the clutch actuator (10) according to an embodiment of the present invention is installed in the actual vehicle, the hydraulic pressure generator (300) may be prevented from interfering with the surrounding structures or other components within an engine room, thereby allowing interference with the hydraulic pressure generator (300) to be minimized, which can change the hydraulic operating force due to the interference. For reference, when the hydraulic pressure generator (300) generating the hydraulic pressure and providing the hydraulic pressure to the outside or a hydraulic pressure hose (not shown) connected to the hydraulic pressure generator interferes with the surrounding structure or other components, it may be difficult to provide a proper hydraulic pressure due to interference with the transmission of the hydraulic pressure to the outside.

As illustrated in FIG. 6, the roller unit (700) may be disposed at a position facing the inclined surface (621) of the cam slider (600) on both side portions of the nut slider (500). According to an embodiment of the present invention, the roller unit (700) may be fixed idly to both sides of the nut slider (500) through the axial coupling. Here, the idle roller (510) may be axially coupled to the same shaft as the roller unit (700). That is, the idle roller (510) and the roller unit (700) may be coupled idly to the nut slider (500) through one shaft (710).

Also, the push rod (800) may be provided on the cam slider (600) to press the piston (310) of the hydraulic pressure generator (300) by means of the linear movement of the cam slider (600).

The push rod (800) may be axially coupled to the cam slider (600) by using the support shaft (650) as a medium as illustrated in FIG. 6 and may move in the same direction as the cam slider (600) by means of the linear movement of the cam slider (600).

Thus, the piston (310) built into the hydraulic pressure generator (300) may be subjected to the external force from the push rod (800) to press the fluid filling the hydraulic pressure generator (300), thereby generating the hydraulic pressure. The hydraulic pressure may be provided to the outside through a separate hydraulic pressure hose (not shown).

That is, as described above, in the clutch actuator (10) according to an embodiment of the present invention, when the ball screw (400) is rotated according to the operation of the driving motor (200), the nut slider (500) may move linearly along the longitudinal direction of the ball screw (400), and the roller unit (700) in contact with the inclined surface (621) of the cam slider (600) may provide the moving force to the cam slider (600) by means of the movement of the nut slider (500). Thus, the cam slider (600) may be subjected to the external force through the contact with the roller unit (700), and the displacement may be varied dependently.

Also, the push rod (800) may move in the advancing direction by means of the movement of the cam slider (600) to apply the external force to the piston (310) of the hydraulic pressure generator (300), thereby generating a predetermined hydraulic pressure within a pressure chamber of the hydraulic pressure generator (300). The generated hydraulic pressure may be transmitted to an external clutch device (not shown) to operate the clutch actuator (10).

### [Description of the Symbols]

| | | | |
|---|---|---|---|
| 10 : | Clutch actuator | | |
| 100 : | Housing | 110: | Second guide portion |
| 120 : | First guide portion | 200 : | Driving motor |
| 210 : | Rotation shaft | 300 : | Hydraulic pressure generator |
| 310 : | Piston | 400 : | Ball screw |
| 500 | : Nut slider | 510 : | Idle roller |
| 600 : | Cam slider | 610 : | Central portion |
| 620 : | First extended portion | 621 : | Inclined surface |
| 630 : | Second extended portion | 640 : | Guide unit |
| 641 : | First guide roller | 642 : | Second guide roller |
| 650 : | Supporting shaft | 700 : | Roller unit |
| 800 : | Push rod | | |

## Claims

1. Clutch actuator (10) comprising:
a housing (100);
a driving motor (200) coupled to one side of the housing;
a hydraulic pressure generator (300) coupled to the other side of the housing;
a ball screw (400) connected to the driving motor so as to be rotated by the driving motor;
a nut slider (500) engaged with the ball screw (400) and which moves along a longitudinal direction of the ball screw by means of the rotation of the ball screw (400), **characterized in that**, a cam slider (600)
moving linearly along an operating direction of the hydraulic pressure generator (300) by means of the movement of the nut slider (500);
a roller unit (700) provided at the nut slider so as to come into rolling contact with the cam slider; and
a push rod (800) provided at the cam slider (600) to press a piston of the hydraulic pressure generator (300),
wherein the housing (100) comprises a first guide portion (120) for guiding the movement of the cam slider (600), and the first guide portion (120) is disposed between the driving motor (200) and the hydraulic pressure generator (300).

2. Clutch actuator according to Claim 1, wherein the nut slider (500) comprises an idle roller (510) in rolling contact with an inner side surface of the housing.

3. Clutch actuator according to Claim 1, wherein the housing (100) comprises a second guide portion (110) for guiding the movement of the nut slider (500).

4. Clutch actuator according to Claim 1, wherein the cam slider (600) comprises:
a central portion (610);
a first extended portion (620) formed extending from the central portion in one direction, the first extended portion comprising an inclined surface (621) in contact with the roller unit (700); and
a second extended portion (630) formed extending from the central portion in a direction intersecting with said one direction,
wherein the second extended portion is accommodated in the first guide portion (120).

5. Clutch actuator according to Claim 4, wherein the cam slider (600) further comprises at least one or more guide units (640) provided at the second extended portion (630) and is in rolling contact with an inner side surface of the first guide portion.

6. Clutch actuator according to Claim 4, wherein the first extended portion (620) is disposed in parallel with a movement direction of the nut slider (500).

7. Clutch actuator according to Claim 1, wherein the second guide portion and the first guide portion (120) are extended in a direction intersecting with each other.

8. Clutch actuator according to Claim 1, wherein the operating direction of the hydraulic pressure generator (300) and the longitudinal direction of the ball screw (400) intersect with each other.

9. Clutch actuator according to Claim 8, wherein the operating direction of the hydraulic pressure generator (300) and the longitudinal direction of the ball screw (400) are perpendicular to each other.

## Patentansprüche

1. Kupplungsaktuator (10), umfassend:
ein Gehäuse (100);
einen Antriebsmotor (200), der mit einer Seite des Gehäuses gekoppelt ist;
einen Hydraulikdruckerzeuger (300), der mit der anderen Seite des Gehäuses gekoppelt ist;
eine Kugelumlaufspindel (400), die so mit dem Antriebsmotor verbunden ist, dass sie durch den Antriebsmotor gedreht wird;
einen Mutterschieber (500), der mit der Kugelumlaufspindel (400) in Eingriff steht und sich durch die Drehung der Kugelumlaufspindel (400) entlang einer Längsrichtung der Kugelumlaufspindel bewegt, **gekennzeichnet durch**
einen Nockenschieber (600), der sich mittels der Bewegung des Mutterschiebers (500) linear entlang einer Wirkrichtung des Hydraulikdruckerzeugers (300) bewegt;
eine Rolleneinheit (700), die am Mutterschieber vorgesehen ist, um in Rollkontakt mit dem Nockenschieber zu kommen; und
eine Schubstange (800), die am Nockenschieber (600) vorgesehen ist, um einen Kolben des Hydraulikdruckerzeugers (300) zu drücken,
wobei das Gehäuse (100) einen ersten Führungsabschnitt (120) zum Führen der Bewegung des Nockenschiebers (600) umfasst und der erste Führungsabschnitt (120) zwischen dem Antriebsmotor (200) und dem Hydraulikdruckerzeuger (300) angeordnet ist.

2. Kupplungsaktuator gemäß Anspruch 1, wobei der Mutterschieber (500) eine Mitläuferrolle (510) umfasst, die in Rollkontakt mit einer inneren Seitenfläche des Gehäuses steht.

3. Kupplungsaktuator gemäß Anspruch 1, wobei das Gehäuse (100) einen zweiten Führungsabschnitt (110) zur Führung der Bewegung des Mutterschiebers (500) umfasst.

4. Kupplungsaktuator gemäß Anspruch 1, wobei der Nockenschieber (600) umfasst:
einen Mittelabschnitt (610);
einen ersten verlängerten Abschnitt (620), der so ausgebildet ist, dass er sich von dem Mittelabschnitt in eine Richtung erstreckt, wobei der erste verlängerte Abschnitt eine geneigte Fläche (621) in Kontakt mit der Rolleneinheit (700) umfasst; und
einen zweiten verlängerten Abschnitt (630), der sich vom Mittelabschnitt in einer Richtung erstreckt, die sich mit der einen Richtung schneidet,
wobei der zweite verlängerte Abschnitt im ersten Führungsabschnitt (120) untergebracht ist.

5. Kupplungsaktuator gemäß Anspruch 4, wobei der Nockenschieber (600) ferner mindestens eine oder mehrere Führungseinheiten (640) umfasst, die am zweiten verlängerten Abschnitt (630) vorgesehen sind und in Rollkontakt mit einer inneren Seitenfläche des ersten Führungsabschnitts stehen.

6. Kupplungsaktuator gemäß Anspruch 4, wobei der erste verlängerte Abschnitt (620) parallel zu einer Bewegungsrichtung des Mutterschiebers (500) angeordnet ist.

7. Kupplungsaktuator gemäß Anspruch 1, wobei der zweite Führungsabschnitt und der erste Führungsabschnitt (120) in einer sich kreuzenden Richtung verlängert sind.

8. Kupplungsaktuator gemäß Anspruch 1, wobei sich die Wirkrichtung des Hydraulikdruckerzeugers (300) und die Längsrichtung der Kugelumlaufspindel (400) kreuzen.

9. Kupplungsaktuator gemäß Anspruch 8, wobei die Wirkrichtung des Hydraulikdruckerzeugers (300) und die Längsrichtung der Kugelumlaufspindel (400) rechtwinklig zueinander stehen.

## Revendications

1. Actionneur d'embrayage (10) comprenant :
un boîtier (100) ;
un moteur d'entraînement (200) couplé à un côté du boîtier ;
un générateur de pression hydraulique (300) couplé à l'autre côté du boîtier ;
une vis à billes (400) reliée au moteur d'entraînement de manière à être mise en rotation par le moteur d'entraînement ;
un coulisseau d'écrou (500) engagé avec la vis à billes (400) et qui se déplace le long d'une direction longitudinale de la vis à billes au moyen de la rotation de la vis à billes (400), characterisé en ce que
un coulisseau de came (600) se déplaçant linéairement le long d'une direction de fonctionnement du générateur de pression hydraulique (300) au moyen du mouvement du curseur d'écrou (500) ;
une unité de rouleau (700) prévue au niveau du coulisseau d'écrou de manière à entrer en contact roulant avec le coulisseau de came ; et
une tige de poussée (800) prévue au niveau du coulisseau de came (600) pour presser un piston du générateur de pression hydraulique (300),
dans lequel le boîtier (100) comprend une première portion de guidage (120) pour guider le mouvement du coulisseau de came (600), et
la première portion de guidage (120) est disposée entre le moteur d'entraînement (200) et le générateur de pression hydraulique (300).

2. Actionneur d'embrayage selon la revendication 1, dans lequel le coulisseau d'écrou (500) comprend un rouleau fou (510) en contact roulant avec une surface latérale interne du logement.

3. Actionneur d'embrayage selon la revendication 1, dans lequel le boîtier (100) comprend une deuxième portion de guidage (110) pour guider le mouvement du coulisseau d'écrou (500).

4. Actionneur d'embrayage selon la revendication 1, dans lequel le coulisseau de came (600) comprend :
une portion centrale (610) ;
une première portion étendue (620) formée s'étendant depuis la portion centrale dans une direction, la première portion étendue comprenant une surface inclinée (621) en contact avec l'unité de rouleau (700) ; et
une deuxième portion étendue (630) formée s'étendant depuis la portion centrale dans une direction coupant ladite une direction,
dans laquelle la seconde portion étendue est logée dans la première portion de guidage (120).

5. Actionneur d'embrayage selon la revendication 4, dans lequel le coulisseau de came (600) comprend en outre au moins une ou plusieurs unités de guidage (640) prévues au niveau de la deuxième portion étendue (630) et est en contact roulant avec une surface latérale interne de la première portion de guidage.

6. Actionneur d'embrayage selon la revendication 4, dans lequel la première portion étendue (620) est disposée parallèlement à une direction de déplacement du coulisseau d'écrou (500).

7. Actionneur d'embrayage selon la revendication 1, dans lequel la deuxième portion de guidage et la première portion de guidage (120) sont étendues dans une direction se croisant l'une l'autre.

8. Actionneur d'embrayage selon la revendication 1, dans lequel la direction de fonctionnement du générateur de pression hydraulique (300) et la direction longitudinale de la vis à billes (400) se croisent.

9. Actionneur d'embrayage selon la revendication 8, dans lequel la direction de fonctionnement du générateur de pression hydraulique (300) et la direction longitudinale de la vis à billes (400) sont perpendiculaires l'une à l'autre.
